# EUROPEAN PATENT SPECIFICATION

(11) **EP 4 282 563 B1**
(45) Date of publication and mention of the grant of the patent: **10.06.2026**
(21) Application number: 21921349.3
(22) Date of filing: 23.12.2021
(51) Int. Cl.: B23B 19/02, F16C 19/06, F16C 33/66, F16N 7/12, F16N 11/00, F16N 31/00, B23Q 11/12, F16C 33/58

(54) **MAIN SPINDLE DEVICE AND METHOD FOR MANUFACTURING MAIN SPINDLE DEVICE**
HAUPTSPINDELVORRICHTUNG UND VERFAHREN ZUR HERSTELLUNG EINER HAUPTSPINDELVORRICHTUNG
DISPOSITIF À BROCHE PRINCIPAL ET PROCÉDÉ DE FABRICATION DE DISPOSITIF À BROCHE PRINCIPAL

(30) Priority: 22.01.2021 JP 2021008786
(43) Date of publication of application: 29.11.2023
(73) Proprietor: NSK Ltd., Tokyo 141-8560 (JP)
(72) Inventor: OGURI, Shoichiro, Fujisawa-shi, Kanagawa 252-0811 (JP); INAGAKI, Yoshifumi, Fujisawa-shi, Kanagawa 252-0811 (JP)
(74) Representative: Grünecker Patent- und Rechtsanwälte PartG mbB
(86) International application number: PCT/JP2021/048063
(87) International publication number: WO 2022/158248

(56) References cited:
- JP-A- 2003 049 849
- JP-A- 2011 163 465
- JP-A- 2011 163 465
- JP-A- 2013 137 109
- JP-A- H0 996 316
- JP-A- H0 996 316
- JP-A- S63 123 657
- JP-A- S63 123 657
- JP-U- S5 725 298
- JP-U- S5 725 298
- US-A1- 2017 002 912

## Description

### TECHNICAL FIELD

The present invention relates to an improvement in a main spindle device and a method for manufacturing the main spindle device.

### BACKGROUND ART

With remarkable advance in high speed of a main shaft for a machine tool, oil-air lubrication has been widespread as a method of lubricating bearings for achieving high speed of the main shaft. In recent years, however, environment countermeasures, energy saving, and resource saving are required. Thus, the oil-air lubrication has cost disadvantage in that noise occurs due to wind noise of fed air, it is necessary to take oil scattering into consideration in terms of environment, it requires a large amount of air, and an incidental facility such as an oil air supply device is required.

There is grease lubrication as a lubrication method in which oil does not scatter at low noise without using air. In grease lubrication, grease is enclosed in advance in a bearing inserted into a device and the bearing is lubricated by a base oil of the enclosed grease. There is a limitation on an amount of grease (base oil) which can be enclosed, and thus an amount of enclosed grease affects a grease lifespan (bearing lifespan). When an amount of grease enclosed in a bearing increases, a grease lifespan increases. However, when an amount of filled grease increases, viscous resistance or stirring resistance increases. Therefore, heat is generated during high-speed rotation, and thus there is a possibility of temperature of the bearing increasing. When the grease degrades earlier due to the increase in the temperature of the bearing, an oil film of the base oil is generated, and there is a possibility of burn-in occurring in the bearing. Therefore, the amount of enclosed grease of the bearing is determined in consideration of a balance between characteristics of an increase in the temperature during high-speed rotation and grease lifespan. When grease is excessively enclosed in the bearing, a running-in time for being familiar with the grease becomes long, and a time for returning to a production line after exchange of the bearing is required. Therefore, production efficiency may deteriorate.

In a roller bearing described in Patent Literature 1, it is known that, in order to increase a grease lifespan, a bearing is lubricated by mounting a grease reservoir forming component at a spacer adjacent to the bearing and causing a base oil in the grease from a gap between the grease reservoir forming component and an outer ring to flow out using a temperature difference at a running time.

JP2011-163465A discloses a main spindle device according to the preamble of claim 1 and a method according to the preamble of claim 8.

### CITATION LIST

### PATENT LITERATURE

Patent Literature 1: JP2007-182917A

### SUMMARY OF INVENTION

### TECHNICAL PROBLEM

However, in the roller bearing disclosed in Patent Literature 1, since the grease reservoir forming component is adjacent to a raceway surface of the outer ring, it is necessary to process the outer ring. When much grease enters a rolling surface of the bearing, there is a concern of a temperature abruptly increasing and burn-in occurring.

The present invention has been devised in view of the above-described problems and an object of the present invention is to provide a main spindle device and a method for manufacturing the main spindle device of which a long lifespan is achieved by stably maintaining an amount of grease in a bearing for a long period and increasing the grease lifespan without needing a long running-in time.

### SOLUTION TO PROBLEM

The foregoing object of the present invention is achieved in the following configuration.
(1) A main spindle device includes a housing and a plurality of roller bearings configured to rotatably support a main shaft with respect to the housing. An outer ring of the roller bearing has a base oil supply hole penetrating in a radial direction. The housing includes a grease path communicating with the base oil supply hole. Grease is sealed inside a bearing space of the roller bearing. During running of the main spindle device, the grease path forms a grease reservoir. From start of use of the main spindle device to exchange of the roller bearing or exchange of the main spindle device itself, an opening of the grease path opposite to the base oil supply hole is sealed by a sealing plug.
(2) A method for manufacturing the main spindle device described in (1) includes: a sealing step of sealing grease inside a bearing space of the roller bearing; and a storing step of storing the grease in the grease path before running-in of the main spindle device, and a sealing step of sealing the opening of the grease path opposite to the base oil supply hole by the sealing plug before running of the main spindle device.

### ADVANTAGEOUS EFFECTS OF INVENTION

In the main spindle device and the method for manufacturing the main spindle device according to the present invention, a base oil of grease stored in a housing-side grease path is supplied to grease inside a bearing by capillarity of a thickener. Accordingly, it is possible to provide the main spindle device of which a long lifespan is achieved by stably maintaining an amount of grease in a bearing for a long period and increasing the grease lifespan without needing a long running-in time.

### BRIEF DESCRIPTION OF DRAWINGS

Fig. 1 is a half sectional view illustrating a main spindle device according to a first embodiment of the present invention.
Fig. 2A is an enlarged view of a portion II of Fig. 1 and Fig. 2B is an enlarged view of a portion II' of Fig. 1.
Fig. 3 is a sectional view illustrating main units of a main spindle device according to a second embodiment of the present invention.
Fig. 4 is a sectional view illustrating main units of a main spindle device according to a third embodiment of the present invention.
Fig. 5 is a sectional view illustrating main units of a main spindle device according to a fourth embodiment of the present invention.
Fig. 6 is a sectional view illustrating main units of a main spindle device according to a modification of the fourth embodiment of the present invention.
Fig. 7 is a sectional view illustrating main units of a main spindle device according to a fifth embodiment of the present invention.
Fig. 8 is a sectional view taken along the line VIII of Fig. 7.
Figs. 9A to 9D are sectional views corresponding to Fig. 8 of the main spindle device according to the modification of the fifth embodiment.
Fig. 10 is a sectional view illustrating main units of a main spindle device according to another modification of the fifth embodiment of the present invention.
Fig. 11A is a partial sectional view illustrating a main spindle device according to a sixth embodiment of the present invention and Fig. 11B is a partial sectional view according to a modification of the sixth embodiment.

### DESCRIPTION OF EMBODIMENTS

Hereinafter, embodiments of a main spindle device for a machine tool which is a main spindle device according to the present invention will be described in detail with reference to the drawings.

### (First Embodiment)

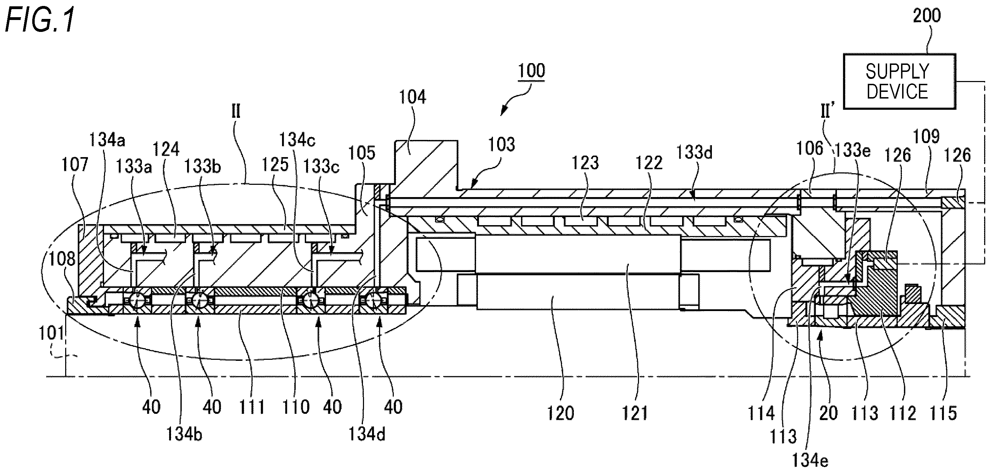

As illustrated in Fig. 1, in a main spindle device 100 for a machine tool according to the embodiment, a main shaft 101 is rotatably supported by angular ball bearings 40 which is a roller bearing and a cylindrical roller bearing 20 inside a housing 103.

The housing 103 includes a housing body 104, a front-side bearing housing 105 internally fitted and fixed at the front end (the left in the drawing) of the housing body 104, and a rear-side bearing housing 106 internally fitted and fixed on the rear side (the right in the drawing) of the housing body 104. At the end of the front-side bearing housing 105, an outer-ring pressing member 107 is provided. The outer-ring pressing member 107 forms a labyrinth seal with an inner-ring pressing member 108 fastened to the main shaft 101.

A rear-end surface of the housing 103 is covered with a cover 109. A sleeve 114 supporting the cylindrical roller bearing is internally fitted in the rear-side bearing housing 106.

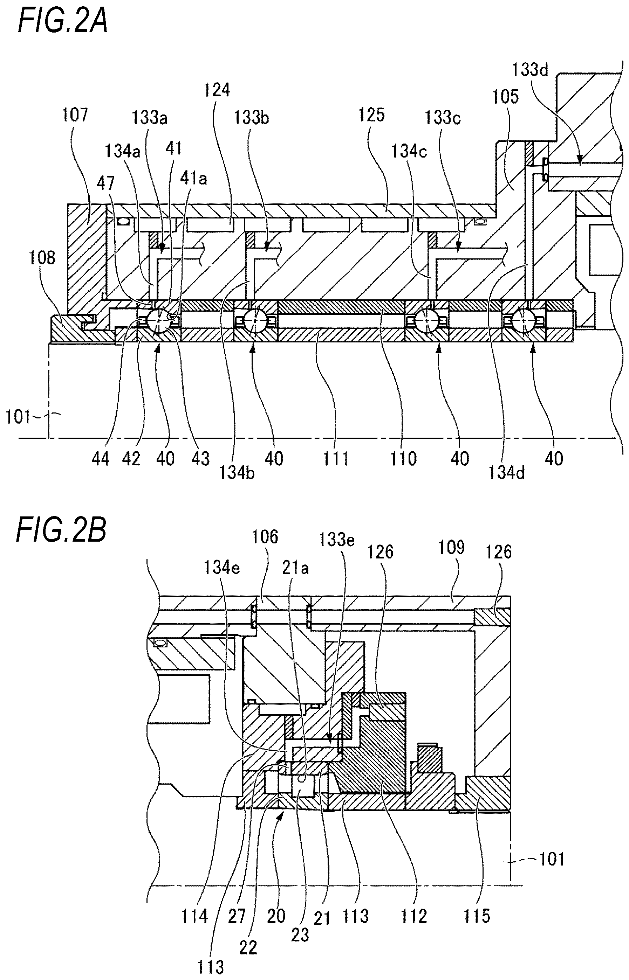

As illustrated in Fig. 2A, four angular ball bearings 40 internally fitted in the front-side bearing housing 105 each include an outer ring 41, an inner ring 42, a plurality of balls 43 serving as rolling elements rollably disposed at contact angles between the outer ring 41 and the inner ring 42, and a retainer 44 retaining the balls 43 at equal intervals in a circumferential direction. As illustrated in Fig. 2B, one cylindrical roller bearing 20 internally fitted in the sleeve 114 also includes an outer ring 21, an inner ring 22, a plurality of rollers 23 serving as rolling elements rollably disposed between the outer ring 21 and the inner ring 22, and a retainer (not illustrated) retaining the rollers 23 at equal intervals in a circumferential direction.

Between the outer rings 41 of the four angular ball bearings 40, outer-ring spacers 110 are disposed. Each outer ring 41 is positioned and fixed by fixing the outer-ring pressing member 107 to the front-side bearing housing 105. Between the inner rings 42, inner-ring spacers 111 are disposed. Each inner ring 42 is positioned and fixed by fastening the inner-ring pressing member 108 to the main shaft 101. Further, on the rear side of the outer ring 21 of the cylindrical roller bearing 20, an outer-ring pressing member 112 is disposed. The outer ring 21 is positioned and fixed by fixing the outer-ring pressing member 112 to the sleeve 114. An inner-ring spacer 113 is disposed on both sides of the inner ring 22 in an axial direction. The inner ring 22 is positioned and fixed by fastening a nut 115 to the main shaft 101.

In the embodiment, the cover 109, the sleeve 114, and the outer-ring pressing member 112 also form a part of the housing 103.

Referring back to Fig. 1, the main spindle device 100 contains a built-in motor including a rotor 120 and a stator 121. The rotor 120 is externally fitted and fixed in a substantially central portion of the main shaft in the axial direction. On the side of the outer circumferential surface of the rotor 120, the stator 121 is disposed to be coaxial at a predetermined distance. The stator 121 is fixed to the housing body 104 via a stator fixing member 122 disposed on the side of the outer circumferential surface of the stator 121. Between the housing body 104 and the stator fixing member 122, a plurality of grooves 123 are formed along a circumferential direction of the main shaft 101. A refrigerant for cooling the stator 121 flows in the plurality of grooves 123.

Similarly, in a portion which is between the front-side bearing housing 105 and a cooling sleeve 125 externally fitted in the housing 105 and is on the outer circumferential side of the angular ball bearing 40, a plurality of grooves 124 in which a housing and bearing cooling refrigerant are formed. The plurality of grooves 124 are formed along the circumferential direction on the outer circumferential surface of the front-side bearing housing 105.

Inside the housing 103, a plurality of grease paths 133a to 133e corresponding to the roller bearings 40 and 20 are formed at different phases in the circumferential direction (in Fig. 1, for convenience, the grease paths 133a to 133e are illustrated at the same cross-sectional surface). Specifically, the grease paths 133a to 133d corresponding to the angular ball bearings 40 are opened to the inner circumferential surface of the front-side bearing housing 105 in which the outer ring 41 of each angular ball bearing 40 is fitted, extend in a radial direction from the opening to be bent to the rear side, extend to a connection surface with the housing body 104, and further extend in the axial direction inside the housing body 104, the rear-side bearing housing 106, and the cover 109, and are opened to the rear end surface of the cover 109. The grease path 133e corresponding to the cylindrical roller bearing 20 is opened to the inner circumferential surface of the sleeve 114 in which the outer ring 21 of the cylindrical roller bearing 20 is fitted, extends in the radial direction from the opening to be bent to the rear side, extend to a connection surface with the outer-ring pressing member 112, further passes through the outer-ring pressing member 112, and is opened to the rear end surface of the outer-ring pressing member 112.

Base oil supply holes 47 and 27 penetrating in the radial direction are respectively formed in the outer rings 41 and 21 of the bearings 40 and 20. In the base oil supply holes 47 and 27, inner diameter sides are opened to the vicinities of the raceway surfaces 41a and 21a, and outer diameter sides are opened to the outer diameter surfaces of the outer rings 41 and 21. Bearing-side openings of the grease paths 133a to 133e communicate with the base oil supply holes 47 and 27 of the outer rings 41 and 21. Openings of the grease paths 133a to 133e opposite to the base oil supply holes 47 and 27 are sealed by a sealing plug 126 during running of the main spindle device 100.

In the embodiment, rectilinear portions (in the embodiment, radial paths) 134a to 134e of the output-side grease paths 133a to 133e continuing with the base oil supply holes 47 and 27 have cross-sectional circular shapes and all have the same diameter dimension (cross-section). The diameter dimension of each of the rectilinear portions 134a to 134e is preferably ϕ12 mm or less and is more preferable in the range of ϕ1 to ϕ5 mm.

The grease paths 133a to 133e are disposed above in an upper perpendicular direction during running of the main spindle device 100 because the base oil is easily supplied by a gravitational force applied to the grease.

In the embodiment, grease corresponding to roughly 10 to 30% of an inner space volume of the bearing is sealed inside the bearing space of the roller bearings 40 and 20. During running of the main spindle device 100, the grease paths 133a to 133e formed in the housing 103 form a grease reservoir and store the grease.

The grease sealed in the bearing and the grease stored in each of the grease paths 133a to 133e has a base oil which is a lubricating oil and a thickener of a fiber structure maintaining the base oil. The base oil can move between fibers of the thickener by capillarity and communicate with a thickener necessary for the base oil to move when the grease paths 133a to 133e serving as grease reservoirs formed on the outer diameter surfaces of the outer rings 41 and 21 ready after running-in are connected to the base oil supply holes 47 and 27 of the outer rings 41 and 21. As a result, the base oil of the grease paths 133a to 133e participates in (is supplied to) the base oil of the grease sealed in the bearing.

In the embodiment, this mechanism enables the base oil of the grease stored in the housing-side grease paths 133a to 133e to be supplied to the grease inside the bearing by the capillarity of the thickener even when the base oil of the grease inside the bearing is consumed. Since the base oil supply holes 47 and 27 of the outer rings 41 and 21 are provided at portions very close to the raceway surfaces 41a and 21a of the outer rings 41 and 21, the base oil can be efficiently supplied.

Accordingly, since the base oil is supplied inside the bearing without causing poor lubrication due to shortage of the base oil, an amount of grease inside the bearing can be stably maintained for a long period, a grease lifespan is increased, and thus a long lifespan of the main spindle device 100 is achieved. That is, from start of use of the main spindle device 100 to exchange of the roller bearings 40 and 20 or to exchange of the main spindle device 100 itself, it is not necessary to supply grease from the outside and long maintenance-free lifespan can be implemented.

In the embodiment, since the grease of roughly 10 to 30% of an inner space volume of the bearing is sealed inside a bearing space, long running-in is unnecessary.

In particular, in the main spindle device 100 for a machine tool rotating at a high speed in the embodiment, a temperature of the periphery of the bearing also increases. A temperature of the grease in the periphery accordingly increases and softening occurs. Therefore, the base oil tends to be more fluid. The base oil of the grease is supplied from the grease reservoirs (the grease paths 133a to 133e). Therefore, the grease lifespan can be lengthened even when high-speed rotation is performed for a long time. Since the grease sealed inside the bearing is 10 to 30% of a proper amount with respect to the space volume, a running-in time can be shortened and a production line return time after exchange of the bearing can be shortened. Since the base oil is supplied by capillarity of the thickener, a proper amount of grease can be supplied to the grease inside the bearing without excess supply of the grease.

When the main spindle device 100 according to the embodiment is assembled, the grease inside the bearing spaces of the roller bearings 40 and 20 is sealed (a sealing step). Then, storing of the grease inside the grease paths 133a to 133e before running of the main spindle device 100 can be performed by a supply device 200 connected to openings opposite to the base oil supply holes 47 and 27 (a storing step). When the storing of the grease inside the grease paths 133a to 133e is completed, the supply device 200 is detached and the sealing plug 126 is mounted on the openings (a sealing step).

Accordingly, the supply device 200 is used to store the grease inside the grease paths 133a to 133e and is used to manufacture the main spindle device 100. Thus, the supply device 200 is not necessary when the main spindle device 100 is running actually (that is, production is performed with the main spindle device 100). Thus, it is possible to suppress manufacturing cost of the main spindle device 100.

A predetermined amount of grease inside the bearing space may be sealed in advance inside the bearing space before the bearings 40 and 20 are embedded in the main spindle device 100. At least part of the grease may also be sealed in the grease paths 133a to 133e and the base oil supply holes 47 and 27 using the supply device 200. In this case, after the sealing the grease, the grease paths 133a to 133e in which the grease is stored form grease reservoirs.

The sealing of the grease through the grease paths 133a to 133e and the base oil supply holes 47 and 27 may be performed before running-in or during running-in. That is, the grease inside the bearings may be sealed by feeding the grease in the grease paths 133a to 133e by a pump or the like of the supply device 200 while rotating the main shaft 101.

Further, when a predetermined amount of grease is sealed in advance in the bearing spaces and the base oil supply holes 47 and 27, the grease is stored inside the grease paths 133a to 133e using the supply device 200 before the bearings 40 and 20 are embedded in the main spindle device 100.

### (Second Embodiment)

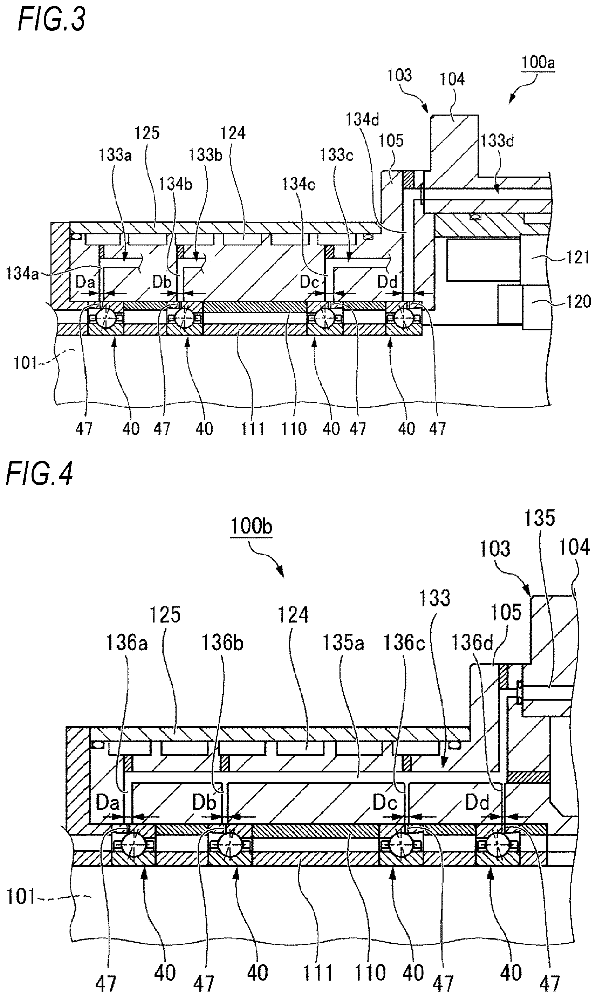

Next, a main spindle device according to a second embodiment will be described with reference to Fig. 3. In a main spindle device 100a, the grease paths 133a to 133d are formed to correspond to the front-side angular ball bearings 40 as in the first embodiment. On the other hand, in the embodiment, diameters of the rectilinear portions (in the embodiment, radial direction paths) 134a to 134d of the grease paths 133a to 133d are set to be larger (Da<Db<Dc<Dd) as a distance from the built-in motor is closer.

When internally generated heat of the main spindle device is high, for example, a built-in motor is mounted, the base oil of the grease may vaporize because of high temperature, and poor lubrication easily occurs. Therefore, as in the embodiment, in an inner situation of the main shaft where a temperature difference occurs in each bearing 40, the diameters of the rectilinear portions 134a to 134d may be designed to be large on a high-temperature side and small on a low-temperature side. When much grease is stored in the rectilinear portions 134a to 134d near the base oil supply holes 47, the base oil of the grease inside the rectilinear portions 134a to 134d is easily supplied inside the bearings via the base oil supply holes 47.

The other configurations and operations are similar to those of the first embodiment.

### (Third Embodiment)

Next, a main spindle device according to a third embodiment will be described with reference to Fig. 4. In a main spindle device 100b, one grease path 133 corresponding to four front-side angular ball bearings 40 is formed. The grease path 133 is branched from an axial direction portion 135a of a common path 135 and includes a plurality of branch paths (radial direction paths) 136a to 136d communicating the base oil supply paths 47 of the plurality of angular ball bearings 40.

In this case, diameters of the branch paths 136a to 136d communicating with the bearings 40 may be the same. As illustrated in Fig. 4, however, when the grease is fed by a pump of the supply device 200 (see Fig. 1) to be sealed, the diameters of the branch paths 136a to 136d of the bearings 40 may be set to larger away from the supply device 200 (Da>Db>Dc>Dd). Accordingly, the grease can be uniformly stored in the plurality of branch paths 136a to 136d in which the grease is widespread.

The other configurations and operations are similar to those of the first embodiment.

When the plurality of grease paths are formed to correspond to the bearings 40 or when one common grease path is formed in each bearing 40, the diameter dimensions of the rectilinear portions 134a to 134d of the grease paths 133a to 133d and the branch paths 136a to 136d of the grease path 133 may be designed in consideration of other factors.

For example, when the grease of which viscosity changes due to temperature is used, the grease supplied along the grease path on the high-temperature side is easily increased. Therefore, the diameters of the rectilinear portions 134a to 134d of the grease paths 133a to 133d and the branch paths 136a to 136d of the grease path 133 may be designed in consideration of the factor that the diameters are large on the high-temperature side and are small on the low-temperature side.

### (Fourth Embodiment)

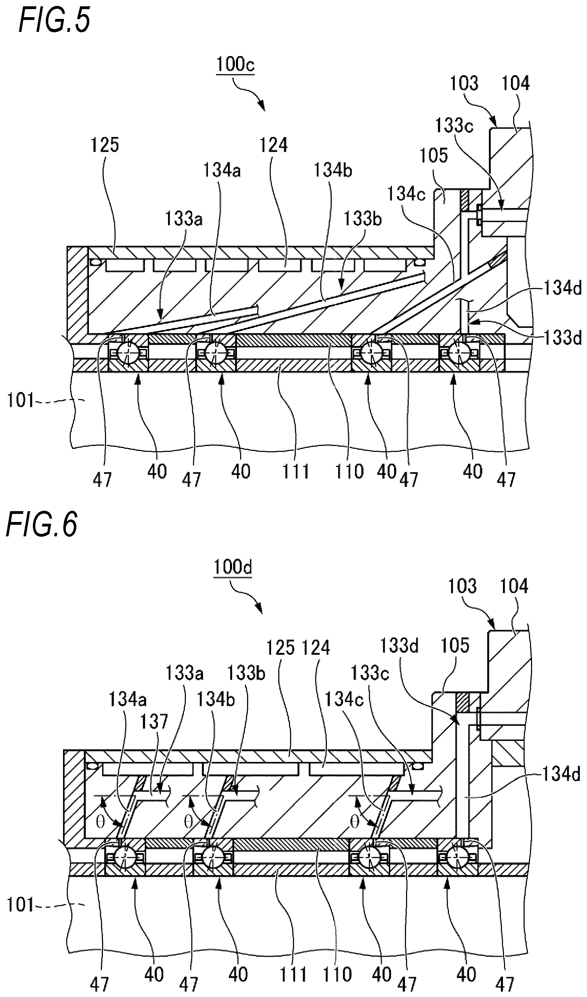

Next, a main spindle device according to a fourth embodiment will be described with reference to Fig. 5. In a main spindle device 100c, the grease paths 133a to 133d are formed to correspond to the front-side bearings 40. In the grease paths 133a to 133c among the grease paths, output-side rectilinear portions 134a to 134c are inclined in the axial direction of the main shaft 101 inside the front-side bearing housing 105. Accordingly, opening dimensions of the rectilinear portions 134a to 134c are broad in the axial direction. Even when the axial direction position deviates from the base oil supply hole 47, there is no problem and the base oil is supplied.

When the output-side rectilinear portions 134a to 134c are inclined, the base oil easily flows and drops in the gravity direction, and thus the base oil can be supplied more stably. Further, for example, when the grease is fed and sealed inside the bearing, a pool of the grease occurring in a 90° bent portion of the path disappears. Therefore, the grease can be sent inside the bearing smoothly.

The other configurations and operations are similar to those of the first embodiment.

In the main spindle device 100c illustrated in Fig. 5, the rectilinear portions 134a to 134c of the grease paths 133a to 133c are formed at different angles from the same axial direction position as the rectilinear portion 134d of the grease path 133d extending in the radial direction. Here, as in the main spindle device 100d according to the modification illustrated in Fig. 6, the rectilinear portions 134a to 134c of the grease paths 133a to 133c are formed at the same angle within a range of 45° to 90° and can come into contact with the axial direction portion 137.

### (Fifth Embodiment)

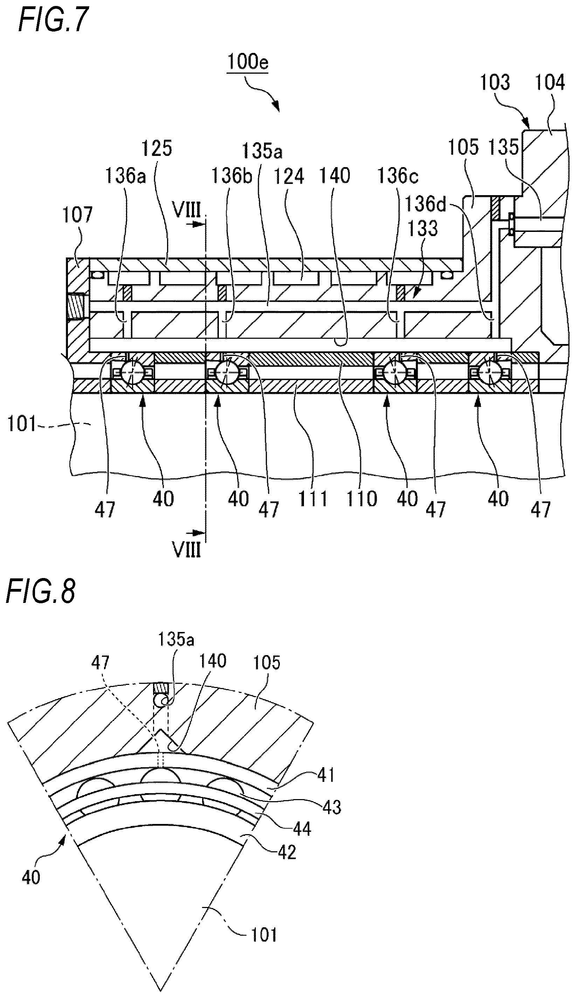

Next, a main spindle device according to a fifth embodiment will be described with reference to Figs. 7 and 8. In a main spindle device 100e, one grease path 133 corresponding to the four front-side angular ball bearings 40 is formed. The grease path 133 is branched from the axial direction portion 135a of the common path 135 and includes a plurality of branch paths (diameter direction paths) 136a to 136d communicating with the plurality of angular ball bearings 40.

On the inner circumferential surface of the front-side bearing housing 105, grease grooves 140 extending in the axial direction are formed at the same phases in the circumferential direction of the plurality of branch paths 136a to 136d.

Accordingly, the grease grooves 140 communicate with the plurality of branch paths 136a to 136d and communicate with the base oil supply holes 47 of the angular ball bearings 40.

In this case, the grease groove 140 has an axial direction length for communicating with the base oil supply hole 47 of each of the four angular ball bearings. In the embodiment, the grease groove 140 is formed until a tip end of the front-side bearing housing 105 at the position of the angular ball bearing 40 near the motor.

Accordingly, the grease groove 140 functions as a grease reservoir. When the base oil of the grease inside the bearing is consumed, the base oil of the grease inside the grease path 133 and the grease groove 140 can be supplied. In particular, in the grease groove 140, the grease can be easily stored even in exchange of the bearing and the grease lifespan can be easily increased.

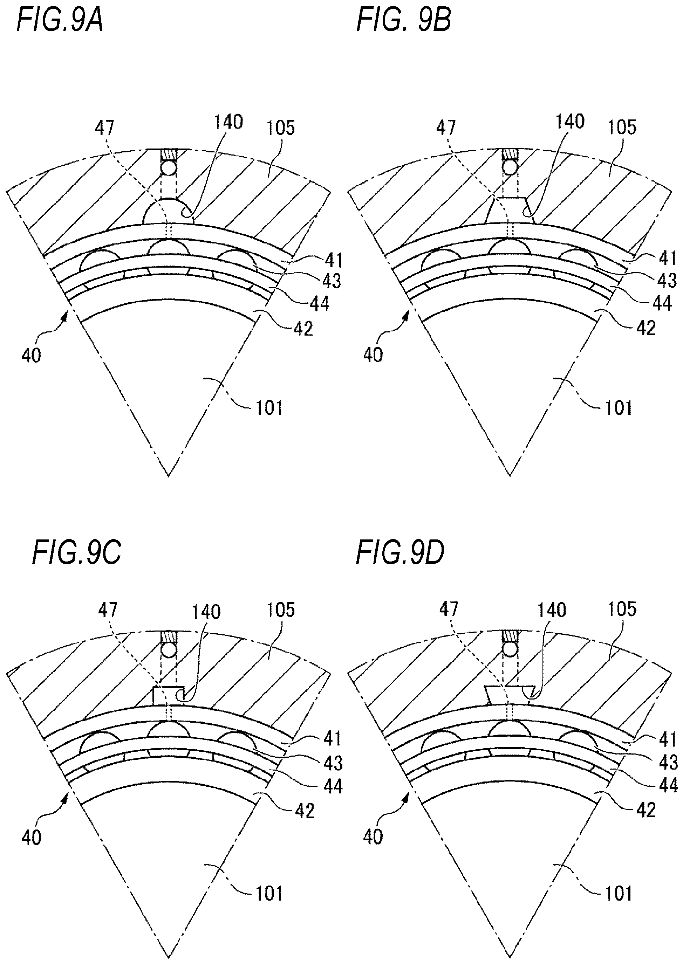

The shape of the grease groove 140 is not limited to a cross-sectional triangle illustrated in Fig. 8. As illustrated in Figs. 9A to 9D, a cross-sectional semicircle, rectangle, or trapezoid may be used.

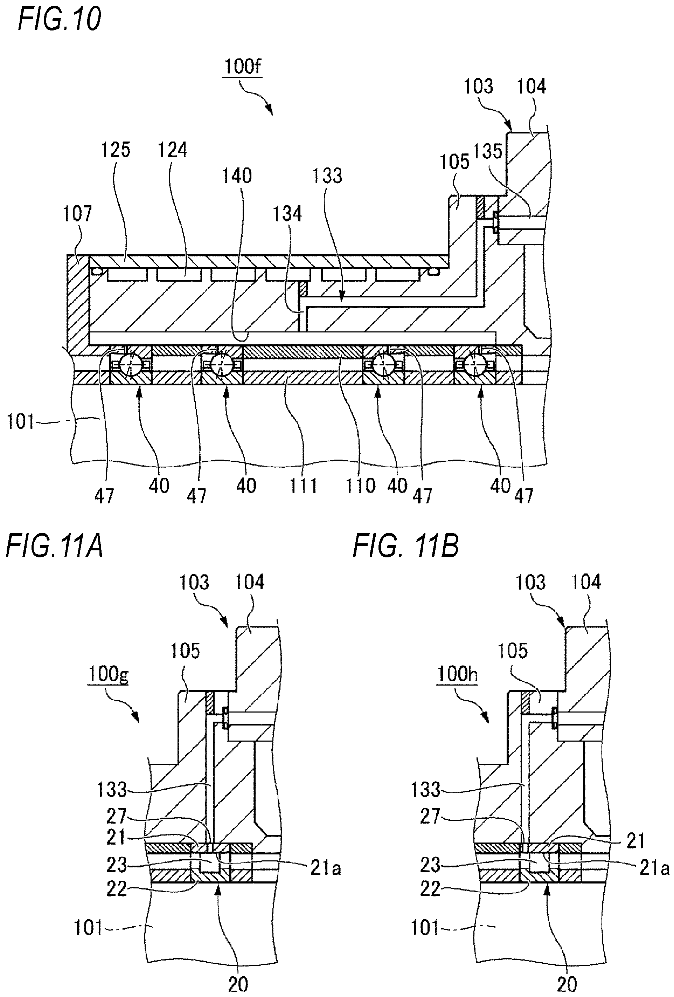

In a main spindle device 100f according to a modification illustrated in Fig. 10, a rectilinear portion 134 of one grease path 133 is opened to the grease groove 140 and the grease path 133 communicates with the base oil supply hole 47 via the grease groove 140. In this case, the grease groove 140 is a part of the grease path 133 and forms a grease reservoir.

### (Sixth Embodiment)

Next, a main spindle device according to a sixth embodiment will be described with reference to Fig. 11A. In a main spindle device 100g, a cylindrical roller bearing is applied as a front-side bearing. In this case, the base oil supply hole 27 is formed at a position facing a cylindrical roller 23 on a raceway surface 21a of an outer ring 21, and the base oil supply hole 27 communicates with the grease path 133. During running of the main spindle device 100g, the grease path 133 forms a grease reservoir.

The other configurations and operations are similar to those of the first embodiment.

As in a main spindle device 100h illustrated in Figs. 11B, the base oil supply hole 27 may be formed at a position opened to the raceway surface 21a of the outer ring 21 away from the cylindrical roller 23 in the axial direction.

The present invention is not limited to the above-described embodiments and modifications and modifications, improvements, and the like can be made appropriately. The present invention is defined by the appended claims.

For example, in the foregoing embodiments, the main spindle device according to the present invention has been described as a main spindle device for a machine tool, but the main spindle device according to the present invention can also be applied to a main spindle device supporting a main shaft for a high-speed motor such as an AC servomotor.

A circumferential direction groove may be provided on at least one of inner circumferential surfaces of the sleeve 114 and the front-side bearing housing 105 to which the grease paths 133a to 133e are opened and outer circumferential surfaces of the outer rings 41 and 21 to which the base oil supply holes 47 and 27 of the outer rings 41 and 21 are opened, and phases in the circumferential direction may be matched between the grease paths 133a to 133e and the base oil supply holes 47 and 27.

As described above, the present specification has the following effects.

According to the configuration of claim 1, the base oil of the grease stored in the housing-side grease path is supplied as the grease inside the bearing by capillarity of a thickener. Accordingly, it is possible to provide the main spindle device of which a long lifespan is achieved by stably maintaining an amount of grease in a bearing for a long period and increasing the grease lifespan without needing a long running-in time.

Furthermore, it is possible to prevent leakage of the grease from the opening of the grease path opposite to the base oil supply hole.

According to the configuration of claim 2, it is possible to stably supply the grease to each roller bearing

According to the configuration of claim 3, the number of grease paths formed in the housing can be decreased, and thus each processing can be easily performed.

According to the configuration of claim 4, opening dimensions of the rectilinear portion is broad in the axial direction, and even when the axial direction position deviates from the base oil supply hole, the base oil is supplied without any problem.

According to the configuration of claim 5, the grease in the grease groove can also be stored, and thus it is possible to stably maintain an amount of the grease inside the bearing for a long period.

According to the configuration of claim 6, the main shaft of the main spindle device for a machine tool rotating at a high speed can be supported by the bearing of which a long lifespan is achieved, and thus maintenance becomes easy.

According to the configuration of claim 7, the main shaft of the main spindle device for a high-speed motor rotating at a high speed can be supported by the bearing of which a long lifespan is achieved, and thus maintenance becomes easy.

According to the method of claim 8, the base oil of the grease stored in the housing-side grease path is supplied as the grease inside the bearing by capillarity of a thickener. Accordingly, it is possible to provide the main spindle device of which a long lifespan is achieved by stably maintaining an amount of grease in a bearing for a long period and increasing the grease lifespan without needing a long running-in time.

Furthermore, it is possible to prevent leakage of the grease from the opening of the grease path opposite to the base oil supply hole.

According to the method of claim 9, the grease can also be sealed near the raceway surface of the outer ring, and thus it is possible to shorten a running-in time.

Priority is claimed on Japanese Patent Application (No. 2021-8786), filed January 22, 2021.

### REFERENCE SIGNS LIST

- 20:: Cylindrical roller bearing (roller bearing)
- 21, 41:: Outer ring
- 22, 42:: Inner ring
- 23:: Cylindrical roller (rolling element)
- 27, 47:: base oil supply hole
- 40:: Angular ball bearing (roller bearing)
- 43:: Ball (rolling element)
- 44:: Retainer
- 100, 100a to 100h:: Main spindle device
- 101:: Main shaft
- 103:: Housing
- 133, 133a to 133e:: Grease path
- 134, 134a to 134e:: Rectilinear portion
- 135:: Common path
- 136a to 136d:: Branch path
- 140:: Grease groove

## Claims

1. A main spindle device (100) comprising:
a housing (103); and
a plurality of roller bearings (20, 40) configured to rotatably support a main shaft (101) with respect to the housing (103),
wherein an outer ring (21, 41) of the roller bearing (20, 40) has a base oil supply hole (27, 47) penetrating in a radial direction,
wherein the housing (103) includes a grease path (133a-133d) communicating with the base oil supply hole (27, 47),
wherein grease is sealed inside a bearing space of the roller bearing (20, 40),
wherein, during running of the main spindle device (100), the grease path (133a-133d) forms a grease reservoir,
**characterised in that**
from start of use of the main spindle device (100) to exchange of the roller bearing (20, 40) or to exchange of the main spindle device (100) itself, an opening of the grease path (133a-133d) opposite to the base oil supply hole (27, 47) is sealed by a sealing plug (126).

2. The main spindle device (100) according to claim 1, wherein the grease path (133a-133d) includes a plurality of grease paths (133a-133d) corresponding to the plurality of roller bearings (20, 40).

3. The main spindle device (100) according to claim 1,
wherein the grease path (133a-133d) is branched from a common path (135) and has a plurality of branch paths (136a-136d) communicating with the plurality of roller bearings (20, 40), and
wherein the plurality of branch paths (136a-136d) each have different diameters.

4. The main spindle device (100) according to any one of claims 1 to 3, wherein a rectilinear portion (134a-134e) continuing with the base oil supply hole (27, 47) of the grease path (133a-133d) is inclined with respect to an axial direction of the main shaft (101).

5. The main spindle device (100) according to any one of claims 1 to 4, wherein a grease groove extending (140) in the axial direction is formed between the roller bearing (20, 40) and the grease path (133a-133d).

6. The main spindle device (100) according to any one of claims 1 to 5, wherein the main spindle device (100) is a main spindle device (100) of a machine tool.

7. The main spindle device (100) according to any one of claims 1 to 5, wherein the main spindle device (100) is a main spindle device of a high-speed motor.

8. A method for manufacturing the main spindle device (100) according to any one of claims 1 to 7, the method comprising:
a sealing step of sealing grease inside a bearing space of the roller bearing (20, 40);
a storing step of storing the grease in the grease path (133a-133d) before running-in of the main spindle device (100),
**characterised by**
a sealing step of sealing the opening of the grease path (133a-133d) opposite to the base oil supply hole (27, 47) by the sealing plug (126) before running of the main spindle device (100).

9. The method for manufacturing the main spindle device (100) according to claim 8, wherein, in the sealing step, at least part of the grease is sealed via the grease path (133a-133d) and the base oil supply hole (27, 47).

## Patentansprüche

1. Hauptspindel-Vorrichtung (100), die umfasst:
ein Gehäuse (103); sowie
eine Vielzahl von Wälzlagern (20, 40), die so ausgeführt sind, dass sie eine Hauptwelle (101) in Bezug auf das Gehäuse (103) drehbar lagern,
wobei ein Außenring (21, 41) des Wälzlagers (20, 40) ein Basis-Ölzuführloch (27, 47) aufweist, das in einer radialen Richtung hindurch verläuft,
wobei das Gehäuse (103) einen Schmierfett-Weg (133a-133d) enthält, der in Verbindung mit dem Basis-Ölzuführloch (27, 47) steht,
wobei Schmierfett im Inneren eines Lagerungs-Raums des Wälzlagers (20, 40) abgedichtet ist,
wobei beim Laufen der Hauptspindel-Vorrichtung (100) der Schmierfett-Weg (133a-133d) einen Schmierfett-Vorratsraum bildet,
**dadurch gekennzeichnet, dass**
vom Beginn des Einsatzes der Hauptspindel-Vorrichtung (100) bis zum Austausch des Wälzlagers (20, 40) oder bis zum Austausch der Hauptspindel-Vorrichtung (100) selbst eine Öffnung des Schmierfett-Weges (133a-133d) gegenüber dem Basis-Ölzuführloch (27, 47) mit einem Dichtungsstopfen (126) abgedichtet ist.

2. Hauptspindel-Vorrichtung (100) nach Anspruch 1, wobei der Schmierfett-Weg (133a-133d) eine Vielzahl von Schmierfett-Wegen (133a-133d) einschließt, die der Vielzahl von Wälzlagern (20, 40) entsprechen.

3. Hauptspindel-Vorrichtung (100) nach Anspruch 1,
wobei der Schmierfett-Weg (133a-133d) von einem gemeinsamen Weg (135) abzweigt und eine Vielzahl von Abzweig-Wegen (136a-136d) aufweist, die mit der Vielzahl von Wälzlagern (20, 40) in Verbindung stehen, und
wobei die Vielzahl von Abzweig-Wegen (136a-136d) jeweils unterschiedliche Durchmesser haben.

4. Hauptspindel-Vorrichtung (100) nach einem der Ansprüche 1 bis 3, wobei ein geradliniger Abschnitt (134a-134e), der sich an das Basis-Ölzuführloch (27, 47) des Schmierfett-Weges (133a-133d) anschließt, in Bezug auf eine axiale Richtung der Hauptwelle (101) geneigt ist.

5. Hauptspindel-Vorrichtung (100) nach einem der Ansprüche 1 bis 4, wobei eine in der axialen Richtung verlaufende Schmierfett-Nut (140) zwischen dem Wälzlager (20, 40) und dem Schmierfett-Weg (133a-133d) ausgebildet ist.

6. Hauptspindel-Vorrichtung (100) nach einem der Ansprüche 1 bis 5, wobei die Hauptspindel-Vorrichtung (100) eine Hauptspindel-Vorrichtung (100) einer Werkzeugmaschine ist.

7. Hauptspindel-Vorrichtung (100) nach einem der Ansprüche 1 bis 5, wobei die Hauptspindel-Vorrichtung (100) eine Hauptspindel-Vorrichtung eines Hochgeschwindigkeitsmotors ist.

8. Verfahren zum Herstellen der Hauptspindel-Vorrichtung (100) nach einem der Ansprüche 1 bis 7, wobei das Verfahren umfasst:
einen Abdicht-Schritt, in dem Schmierfett im Inneren eines Lagerungs-Raums des Wälzlagers (20, 40) abgedichtet wird;
einen Speicher-Schritt, in dem das Schmierfett in dem Schmierfett-Weg (133a-133d) vor Einlaufen der Hauptspindel-Vorrichtung (100) gespeichert wird,
**gekennzeichnet durch**
einen Abdicht-Schritt, in dem die Öffnung des Schmierfett-Weges (133a-133d) gegenüber dem Basis-Ölzuführloch (27, 47) mit dem Dichtungsstopfen (126) vor Laufen der Hauptspindel-Vorrichtung (100) abgedichtet wird.

9. Verfahren zum Herstellen der Hauptspindel-Vorrichtung (100) nach Anspruch 8, wobei in dem Abdicht-Schritt wenigstens ein Teil des Schmierfetts über den Schmierfett-Weg (133a-133d) und das Basis-Ölzuführloch (27, 47) abgedichtet wird.

## Revendications

1. Dispositif à broche principal (100) comprenant :
un boîtier (103) ; et
une pluralité de roulements à rouleaux (20, 40) configurée pour soutenir en rotation un arbre principal (101) par rapport au boîtier (103),
dans lequel une bague extérieure (21, 41) du roulement à rouleaux (20, 40) présente un trou d'alimentation en huile de base (27, 47) pénétrant dans une direction radiale,
dans lequel le boîtier (103) inclut un circuit de graisse (133a-133d) communicant avec le trou d'alimentation en huile de base (27, 47),
dans lequel une graisse est contenue de manière étanche à l'intérieur d'un espace de roulement du roulement à rouleaux (20, 40),
dans lequel, au cours du fonctionnement du dispositif à broche principal (100), le circuit de graisse (133a-133d) constitue un réservoir de graisse,
**caractérisé en ce que**
du début d'utilisation du dispositif à broche principal (100) à un échange du roulement à rouleaux (20, 40) où à un échange du dispositif à broche principal (100) proprement dit, une ouverture du circuit de graisse (133a-133d) opposée au trou d'alimentation en huile de base (27, 47) est scellée par un bouchon d'étanchéité (126).

2. Le dispositif à broche principal (100) selon la revendication 1, dans lequel le circuit de graisse (133a-133d) inclut une pluralité de circuits de graisse (133a-133d) correspondant à la pluralité de roulements à rouleaux (20, 40).

3. Le dispositif à broche principal (100) selon la revendication 1,
dans lequel le circuit de graisse (133a-133d) est ramifié à partir d'un circuit commun (135) et présente une pluralité de circuits de ramification (136a-136d) communiquant avec la pluralité de roulements à rouleaux (20, 40), et
dans lequel la pluralité de circuits de ramification (136a-136d) présentent chacun des diamètres différents.

4. Le dispositif à broche principal (100) selon l'une quelconque des revendications 1 à 3, dans lequel une partie rectiligne (134a-134e) se poursuivant par le trou d'alimentation en huile de base (27, 47) du circuit de graisse (133a-133d) est inclinée par rapport à une direction axiale de l'arbre principal (101).

5. Le dispositif à broche principal (100) selon l'une quelconque des revendications 1 à 4, dans lequel une gorge de graisse (140) s'étendant dans la direction axiale est constituée entre le roulement à rouleaux (20, 40) et le circuit de graisse (133a-133d).

6. Le dispositif à broche principal (100) selon l'une quelconque des revendications 1 à 5, dans lequel le dispositif à broche principal (100) est un dispositif à broche principal (100) d'une machine-outil.

7. Le dispositif à broche principal (100) selon l'une quelconque des revendications 1 à 5, dans lequel le dispositif à broche principal (100) est un dispositif à broche principal (100) d'un moteur à haut régime.

8. Procédé pour fabriquer un dispositif à broche principal (100) selon l'une quelconque des revendications 1 à 7, le procédé comprenant :
une étape d'étanchéification de rétention de manière étanche d'une graisse à l'intérieur d'un espace de roulement du roulement à rouleaux (20, 40) ;
une étape de stockage de stockage de la graisse dans le circuit de graisse (133a-133d) avant un rodage du dispositif à broche principal(100),
**caractérisé par**
une étape d'étanchéification d'étanchéification de l'ouverture du circuit de graisse (133a-133d) opposée au trou d'alimentation en huile de base (27, 47) par le bouchon d'étanchéification (126) avant une mise en fonctionnement du dispositif à broche principal (100).

9. Le procédé de fabrication du dispositif à broche principal (100) selon la revendication 8,
dans lequel, à l'étape d'étanchéification, au moins une partie de la graisse est retenue de manière étanche via le circuit de graisse (133a-133d) et le trou d'alimentation en huile de base (27, 47).
